# EUROPEAN PATENT APPLICATION

(11) **EP 4 851 233 A1**
(43) Date of publication of application: **09.12.2026**
(21) Application number: 25748289.3
(22) Date of filing: 22.01.2025
(51) Int. Cl.: C08J 9/00, B29C 65/08, B32B 5/18, B32B 7/022, C08J 9/26

(54) **VENTILATION STRUCTURE AND POROUS FILM**

(30) Priority: 31.01.2024 JP 2024013015
(71) Applicant: Nitto Denko Corporation, Ibaraki-shi, Osaka 567-8680 (JP)
(72) Inventor: FUKUDA, Daiki, Ibaraki-shi, Osaka 567-8680 (JP); MIYAGAKI, Akira, Ibaraki-shi, Osaka 567-8680 (JP)
(74) Representative: Müller-Boré & Partner Patentanwälte PartG mbB
(86) International application number: PCT/JP2025/001968
(87) International publication number: WO 2025/164481

(57) **Abstract**

An air-permeable structure (100) includes a housing (20) having an opening (21), and a porous membrane (10) ultrasonically welded to the housing (20) so as to cover the opening (21). The porous membrane (10) has a first principal surface (10a) facing the opening (21) and a second principal surface (10b) facing a side opposite to the opening (21). When the maximum stress when a push pin is pushed from the first principal surface (10a) side of the porous membrane (10) is defined as the welding strength of the porous membrane (10), the welding strength of the porous membrane (10) is in the range of 1.5 N or more and 30 N or less. The housing (20) includes, for example, a housing of an automotive component.

## Description

### TECHNICAL FIELD

The present invention relates to an air-permeable structure and a porous membrane.

### BACKGROUND ART

Hitherto, in an automotive component, an electronic device, or the like, an air-permeable membrane has been used in order to eliminate a pressure difference between the inside and outside of a housing. The air-permeable membrane is attached to the housing so as to cover an opening provided in the housing, and is intended to achieve dustproofing and waterproofing while ensuring air permeability. A porous membrane having good air permeability is often used as such an air-permeable membrane.

A porous membrane serving as an air-permeable membrane is joined to a housing of an automotive component, an electronic device, or the like by bonding using a double-sided tape, an adhesive, or the like, or by welding, such as ultrasonic welding, heat welding, or laser welding. Bonding is a simple method, but cannot be said to provide sufficient chemical resistance. In the case where the bonding is employed in the housing of the automotive component, when oil, gasoline, or the like adheres to the double-sided tape, the adhesive, or the like, a decrease in bonding strength may occur. Therefore, the porous membrane is desirably joined to the housing of the automotive component by welding, which is less liable to be affected by oil, gasoline, or the like. For example, Patent Literature 1 describes a technique for welding a gas-permeable porous fluororesin membrane made of a fluororesin to a housing (resin component) for enclosing an electrical component of an automobile.

### CITATION LIST

### Patent Literature

Patent Literature 1: JP 2015-205420 A

### SUMMARY OF INVENTION

### Technical Problem

According to the technique described in Patent Literature 1, although improvement in welding strength of the porous membrane to the housing can be expected, a convex portion provided on the acting surface of a welding horn included in a welding apparatus is indispensable. A technique capable of exhibiting excellent welding strength based on the characteristics of the porous membrane itself without depending on the structure of the welding apparatus has been desired.

In view of the foregoing, an object of the present invention is to provide an air-permeable structure improved in welding strength of a porous membrane to a housing and a porous membrane improved in welding strength to a housing.

### Solution to Problem

The present invention provides an air-permeable structure including:
a housing having an opening; and
a porous membrane ultrasonically welded to the housing so as to cover the opening,
wherein the porous membrane has a first principal surface facing the opening and a second principal surface facing a side opposite to the opening, and
wherein when a maximum stress when a push pin is pushed from the first principal surface side of the porous membrane is defined as a welding strength of the porous membrane, the welding strength of the porous membrane is in a range of 1.5 N or more and 30 N or less.

In another aspect, the present invention provides a porous membrane having a welding strength in a range of 1.5 N or more and 30 N or less, which is determined by the following welding strength measurement test.

### <Welding strength measurement test>

A sample body in which the porous membrane is ultrasonically welded to a housing having an opening so as to cover the opening is produced. In the sample body, the porous membrane has a first principal surface facing the opening and a second principal surface facing a side opposite to the opening. For the sample body, a maximum stress when a push pin is pushed from the first principal surface side of the porous membrane is measured. The measured value is defined as a welding strength of the porous membrane.

### Advantageous Effects of Invention

The present invention can provide an air-permeable structure improved in welding strength of a porous membrane to a housing and a porous membrane improved in welding strength to a housing.

### BRIEF DESCRIPTION OF DRAWINGS

FIG. 1A is a cross-sectional view schematically showing an example of a porous membrane of the present invention.
FIG. 1B is a plan view schematically showing the porous membrane of FIG. 1A.
FIG. 2A is a cross-sectional view schematically showing an example of an air-permeable structure of the present invention.
FIG. 2B is a plan view schematically showing the air-permeable structure of FIG. 2A.
FIG. 3 is a cross-sectional view schematically showing an example of a welding apparatus.
FIG. 4 is a schematic diagram for describing a welding strength measurement test.
FIG. 5 is a scanning electron microscope (SEM) image of a cross-section of a porous PTFE membrane of Example 3.

### DESCRIPTION OF EMBODIMENTS

An air-permeable structure according to a first aspect of the present invention includes:
a housing having an opening; and
a porous membrane ultrasonically welded to the housing so as to cover the opening;
wherein the porous membrane has a first principal surface facing the opening and a second principal surface facing a side opposite to the opening, and
wherein when a maximum stress when a push pin is pushed from the first principal surface side of the porous membrane is defined as a welding strength of the porous membrane, the welding strength of the porous membrane is in a range of 1.5 N or more and 30 N or less.

According to a second aspect of the present invention, for example, in the air-permeable structure according to the first aspect, the porous membrane includes fibrils and nodes connected to the fibrils, and an average node area of the porous membrane is in a range of more than 100 µm² and 500 µm² or less.

According to a third aspect of the present invention, for example, the air-permeable structure according to the first or second aspect has a first region in which the housing and the porous membrane are present, and which includes a welded portion formed between the housing and the porous membrane, and a second region in which the housing is absent and the porous membrane is exposed, and an average thickness of the porous membrane in the second region is in a range of 120 µm or more and 350 µm or less.

According to a fourth aspect of the present invention, for example, in the air-permeable structure according to any one of the first to third aspects, a Gurley air permeability of the porous membrane is in a range of 3 seconds/100 mL or more and 40 seconds/100 mL or less.

According to a fifth aspect of the present invention, for example, in the air-permeable structure according to any one of the first to fourth aspects, the housing is formed of a thermoplastic resin.

According to a sixth aspect of the present invention, for example, in the air-permeable structure according to any one of the first to fifth aspects, the housing includes a housing of an automotive component.

A porous membrane according to a seventh aspect of the present invention has a welding strength in a range of 1.5 N or more and 30 N or less, which is determined by the following welding strength measurement test.

### <Welding strength measurement test>

A sample body in which the porous membrane is ultrasonically welded to a housing having an opening so as to cover the opening is produced. In the sample body, the porous membrane has a first principal surface facing the opening and a second principal surface facing a side opposite to the opening. For the sample body, a maximum stress when a push pin is pushed from the first principal surface side of the porous membrane is measured. The measured value is defined as a welding strength of the porous membrane.

According to an eighth aspect of the present invention, for example, the porous membrane according to the seventh aspect includes fibrils and nodes connected to the fibrils, and has an average node area in a range of more than 100 µm² and 500 µm² or less.

According to a ninth aspect of the present invention, for example, the porous membrane according to the seventh or eighth aspect has an average thickness in a range of 120 µm or more and 350 µm or less.

According to a tenth aspect of the present invention, for example, the porous membrane according to any one of the seventh to ninth aspects has a Gurley air permeability in a range of 3 seconds/100 mL or more and 40 seconds/100 mL or less.

According to an eleventh aspect of the present invention, for example, the porous membrane according to any one of the seventh to tenth aspects is used as an air-permeable membrane of an automotive component.

Hereinafter, embodiments of the present invention will be described with reference to the drawings. The present invention is not limited to the following embodiments.

### [Porous membrane]

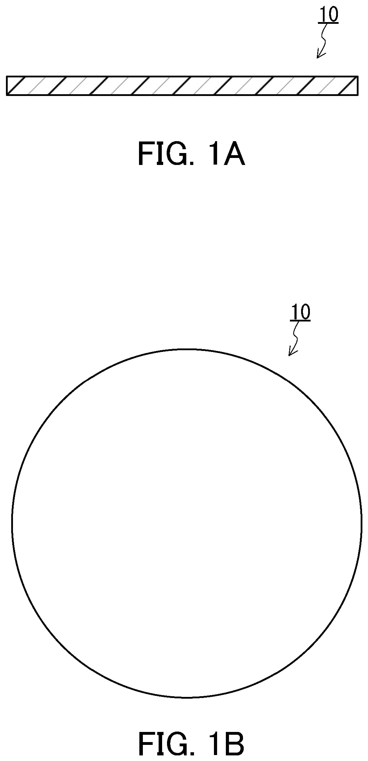

FIG. 1A is a cross-sectional view schematically showing an example of a porous membrane 10 of the present invention. FIG. 1B is a plan view schematically showing the porous membrane 10 of FIG. 1A. As shown in FIG. 1B, the porous membrane 10 has a circular shape in plan view. The porous membrane 10 of the present embodiment has a welding strength S in the range of 1.5 N or more and 30 N or less.

In the technique described in Patent Literature 1, a convex portion provided on the acting surface of a welding horn included in a welding apparatus is indispensable so as to enhance the welding strength of the porous membrane to the housing. In contrast, the porous membrane 10 of the present embodiment has a welding strength S in the range of 1.5 N or more and 30 N or less based on the characteristics of the porous membrane itself, and has an excellent welding strength S.

### <Welding strength measurement test>

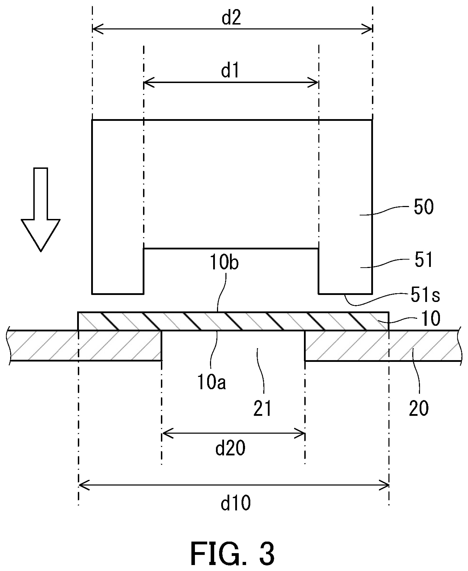

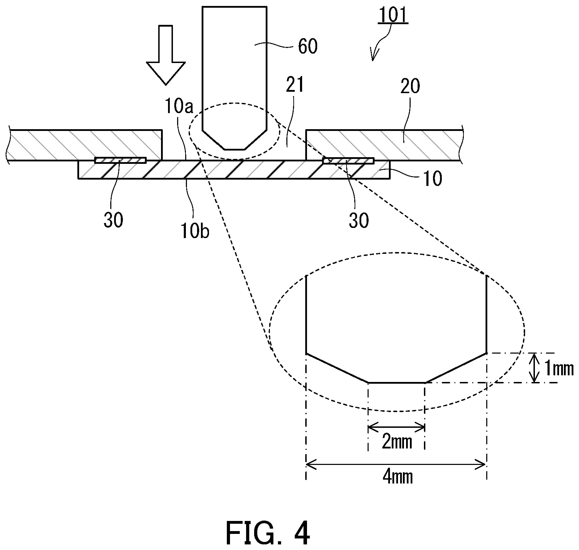

The welding strength S of the porous membrane 10 can be measured by a test described below. FIG. 3 is a cross-sectional view schematically showing an example of a welding apparatus 50. FIG. 4 is a schematic diagram for describing the measurement test of the welding strength S. First, as shown in FIG. 3, the circular porous membrane 10 having a diameter d10 of 10 mm is concentrically disposed on a housing 20 having a circular opening 21 having a diameter d20 of 4.9 mm so as to cover the opening 21. Next, through use of the welding apparatus 50, the porous membrane 10 is ultrasonically welded to the housing 20 by a welding horn 51 to produce a sample body 101. The welding horn 51 has an annular shape in plan view. The welding horn 51 has an inner diameter d1 of 6.6 mm and an outer diameter d2 of 8.2 mm. When the sample body 101 is produced, a frequency is 35 kHz, an amplitude is 32.5 µm, a contact load (load of the welding horn 51 before ultrasonic vibration is applied) is 25 N, a welding load (load of the welding horn 51 when ultrasonic vibration is applied) is 50 N, and a welding energy is 30 J. A stop mode is set to "energy". Next, as shown in FIG. 4, the sample body 101 is set in a tensile tester. In the sample body 101, the porous membrane 10 has a first principal surface 10a facing the opening 21 and a second principal surface 10b facing a side opposite to the opening 21. For the sample body 101, a maximum stress σ when a push pin 60 having a diameter of 4 mm and a tip diameter of 2 mm is pushed from the first principal surface 10a side of the porous membrane 10 under the condition of 1 mm/min is measured. The measured maximum stress σ is defined as the welding strength S of the porous membrane 10. The welding strength S may be an average value of the maximum stresses σ measured for a plurality of (e.g., five) sample bodies 101. In the present disclosure, the "principal surface" means a surface having the largest area of a sheet-shaped or film-shaped member.

The porous membrane 10 in the present embodiment is used without a support material, such as a nonwoven fabric or a mesh, laminated thereon.

The lower limit of the welding strength S of the porous membrane 10 may be 2.5 N or more, 5 N or more, 7.5 N or more, or even 10 N or more. The upper limit of the welding strength S of the porous membrane 10 may be 29 N or less, 28 N or less, or even 27 N or less.

The porous membrane 10 may be a single-layer membrane. The porous membrane 10 may be a laminated membrane in which a plurality of layers are laminated.

The porous membrane 10 may be a porous fluororesin membrane. The porous fluororesin membrane is a porous membrane formed by making a fluororesin membrane porous through stretching or the like, typically through biaxial stretching. The porous fluororesin membrane may include a large number of fibrils formed during stretching and nodes connected to the fibrils. Stretching a fluororesin sheet results in formation of the nodes and the fibrils. The configuration of the nodes and the fibrils may vary depending on, for example, the conditions of the stretching of the fluororesin sheet.

Examples of a fluororesin included in the porous fluororesin membrane include polytetrafluoroethylene (PTFE), polychlorotrifluoroethylene, a tetrafluoroethylene-hexafluoropropylene copolymer, and a tetrafluoroethylene-ethylene copolymer.

The fluororesin may be PTFE. That is, the porous fluororesin membrane may be a porous PTFE membrane. The porous PTFE membrane is excellent in function of preventing entry of foreign matter, such as water and dust, from the outside into the inside of the housing because the porous PTFE membrane has excellent water resistance and dustproof properties.

When the porous membrane 10 includes the fibrils and the nodes, a length L1 of the nodes in its longitudinal direction is preferably in the range of 5 µm or more and 80 µm or less, and a length L2 of the nodes in its lateral direction is preferably in the range of 1 µm or more and 30 µm or less. When the length L1 of the nodes included in the porous membrane 10 in the longitudinal direction and the length L2 thereof in the lateral direction are in the above numerical ranges, the condition that the welding strength S is in the range of 1.5 N or more and 30 N or less is likely to be satisfied.

The lower limit of the length L1 of the nodes in the longitudinal direction may be 10 µm or more. The upper limit of the length L1 the nodes in the longitudinal direction may be 70 µm or less. The lower limit of the length L2 of the nodes in the lateral direction may be 5 µm or more. The upper limit of the length L2 of the nodes in the lateral direction may be 20 µm or less.

When the porous membrane 10 includes the fibrils and the nodes, an average node area An of the porous membrane 10 is preferably in the range of more than 100 µm² and 500 µm² or less. When the average node area An of the porous membrane 10 is in the above numerical range, the condition that the welding strength S is in the range of 1.5 N or more and 30 N or less is likely to be satisfied.

The lower limit of the average node area An of the porous membrane 10 may be 110 µm² or more, 120 µm² or more, or even 130 µm² or more. The upper limit of the average node area An of the porous membrane 10 may be 450 µm² or less, 400 µm² or less, 350 µm² or less, or even 300 µm² or less.

When the porous membrane 10 includes the fibrils and the nodes, the porous membrane 10 preferably has a structure in which the nodes are connected in the extending direction of the fibrils. According to the porous membrane 10 having such a structure, the condition that the welding strength S is in the range of 4.5 N or more is likely to be satisfied.

The lower limit of the average node area An of the porous membrane 10 may be 200 µm² or more, or even 250 µm² or more. When the lower limit of the average node area An of the porous membrane 10 is in the above numerical range, the porous membrane 10 is likely to have a structure in which the nodes are connected in the extending direction of the fibrils.

### <Method for measuring node length and node area>

The length L1 of the nodes included in the porous membrane 10 in the longitudinal direction, the length L2 thereof in the lateral direction, and the average node area An of the nodes can be determined by a measuring method described below. First, a cross-section of the porous membrane 10 cut in parallel with its thickness direction is observed with a scanning electron microscope (SEM). Next, the obtained SEM observation image (or part thereof) is binarized by using image software (e.g., ImageJ). An image of only the nodes is created by deleting the fibrils from the obtained binarized image. In the process of deleting the fibrils, the fibrils can be deleted by enlarging the binarized image and painting a region of the fibrils black. For each of "n" nodes included in the obtained image of only the nodes, the length in the longitudinal direction, the length in the lateral direction, and the area are calculated. For example, through use of an observation image including at least 10 (n = 10) nodes, the lengths in the longitudinal direction, lengths in the lateral direction, and areas of the nodes can be calculated. The average value of the calculated lengths in the longitudinal direction is defined as the length L1 of the nodes in the longitudinal direction. The average value of the calculated lengths in the lateral direction is defined as the length L2 of the nodes in the lateral direction. The average value of the calculated areas is defined as the average node area An. Note that, for acquisition of the lengths in the longitudinal direction, lengths in the lateral direction, and areas of the nodes, an observation image sufficiently wide to be judged to observe the entire cross-section of the porous membrane 10 cut in parallel with the thickness direction should be used. The observation image preferably includes a region of at least 120 µm × 90 µm.

When the porous membrane 10 includes the fibrils and the nodes, a length L3 of the fibrils in its longitudinal direction is preferably in the range of 8 µm or more and 30 µm or less. When the length L3 of the fibrils included in the porous membrane 10 in the longitudinal direction is in the above numerical range, the condition that the welding strength S is in the range of 1.5 N or more and 30 N or less is likely to be satisfied.

The length L3 of the fibrils in the longitudinal direction included in the porous membrane 10 can be determined by a measuring method described below. In the method for measuring the node length and the node area described above, an image of only the fibrils is created by deleting the nodes from the obtained binarized image, and the length in the longitudinal direction is calculated for each of N fibrils included in the obtained image of only the fibrils. For example, through use of an observation image including at least 100 (N = 100) fibrils, the lengths of the fibrils in the longitudinal direction can be calculated. The average value of the calculated lengths in the longitudinal direction is defined as the length L3 of the fibrils in the longitudinal direction.

The porous membrane 10 preferably has an average thickness in a range of 120 µm or more and 350 µm or less. When the average thickness of the porous membrane 10 is in the above numerical range, the condition that the welding strength S is in the range of 1.5 N or more and 30 N or less is likely to be satisfied.

The lower limit of the average thickness of the porous membrane 10 may be 125 µm or more, 135 µm or more, 150 µm or more, or even 175 µm or more. The upper limit of the average thickness of the porous membrane 10 may be 340 µm or less, 330 µm or less, or even 320 µm or less.

### <Method for measuring thickness>

The average thickness of the porous membrane 10 can be determined by measuring thicknesses at any five points on the porous membrane 10 with, for example, a dial gauge and averaging the measured values. The average thickness of the porous membrane 10 can also be determined by measuring thicknesses at any five points in a SEM observation image of a cross-section of the porous membrane 10 and averaging the measured values.

The porous membrane 10 preferably has an average node area An in the range of more than 100 µm² and 500 µm² or less, and an average thickness in the range of 120 µm or more and 350 µm or less. When the average node area An of the porous membrane 10 is in the above numerical range and the average thickness of the porous membrane 10 is in the above numerical range, the condition that the welding strength S is in the range of 1.5 N or more and 30 N or less is more likely to be satisfied.

The porous membrane 10 preferably has a Gurley air permeability in the range of 3 seconds/100 mL or more and 40 seconds/100 mL or less.

The lower limit of the Gurley air permeability of the porous membrane 10 may be 5 seconds/100 mL or more, 7.5 seconds/100 mL or more, or even 10 seconds/100 mL or more.

### <Method for measuring Gurley air permeability>

The Gurley air permeability of the porous membrane 10 can be measured according to a Gurley tester method specified in JIS P 8117:2009.

As mentioned above, in the housing of the automotive component, the porous membrane 10 is desirably joined to the housing 20 by welding. The porous membrane 10 is particularly suitably used as an air-permeable membrane of an automotive component because the porous membrane 10 has a welding strength S in the range of 1.5 N or more and 30 N or less and has an excellent welding strength S.

The porous membrane 10 may be supplied in the form of, for example, a tape-shaped member to which the circular porous membranes 10 are bonded in a row along the longitudinal direction of a tape-shaped base sheet. The porous membrane 10 may be supplied in the form of, for example, a sheet-shaped member to which the circular porous membranes 10 are bonded at equal intervals over the entire surface of a single sheet-shaped base sheet.

### [Method for manufacturing porous membrane]

Hereinafter, a method for manufacturing the porous membrane 10 will be described. The porous membrane 10 can be manufactured by, for example, a method described below. The method described below is an example of a case in which the porous membrane 10 is a porous PTFE membrane.

First, a liquid lubricant is uniformly mixed with a fine PTFE powder. The mixture is compressed in a cylinder, and then extruded with a ram extruder. Thus, a sheet-shaped molded body extending in a predetermined direction is obtained. The sheet-shaped molded body is passed between rolling rolls in a state of containing the liquid lubricant to be rolled. After the removal of the liquid lubricant by heating the sheet-shaped molded body, the sheet-shaped molded body is dried. Next, the sheet-shaped molded body is stretched once only in its longitudinal direction. Thus, the porous PTFE membrane can be obtained. Characteristics of the porous PTFE membrane, such as the average node area An and the average thickness, can be adjusted by the conditions of the stretching.

### [Air-permeable structure]

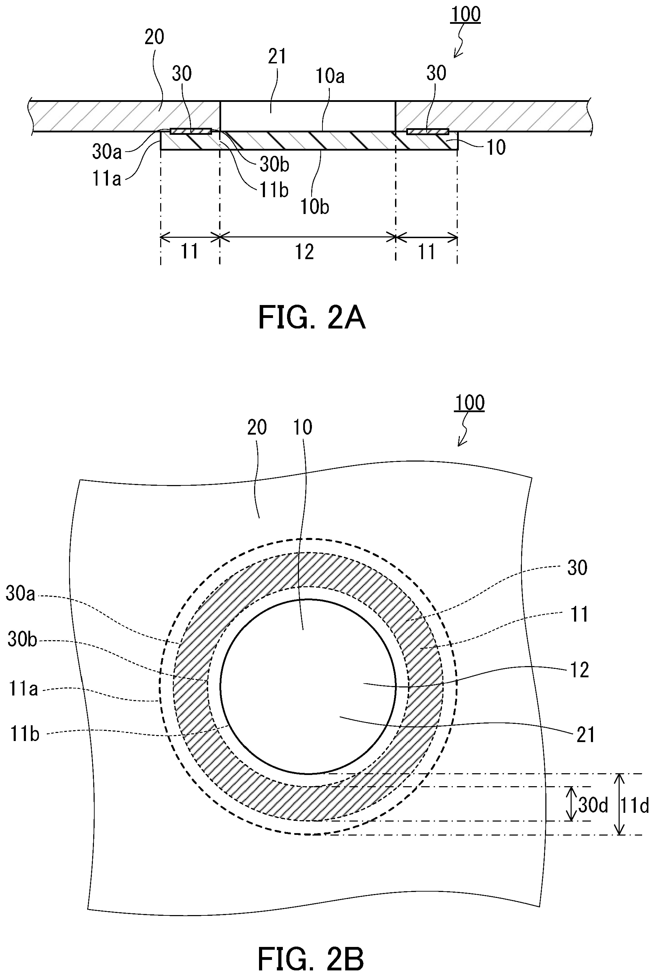

Next, the air-permeable structure of the present invention will be described. FIG. 2A is a cross-sectional view schematically showing an example of an air-permeable structure 100 of the present invention. FIG. 2B is a plan view schematically showing the air-permeable structure 100 of FIG. 2A. The air-permeable structure 100 includes the housing 20, and the porous membrane 10 having the features described above. As shown in FIG. 2B, the opening 21 of the housing 20 has a circular shape in plan view. Hereinafter, the description of the porous membrane 10 described above may be omitted.

The air-permeable structure 100 includes the housing 20 having the opening 21, and the porous membrane 10 ultrasonically welded to the housing 20 so as to cover the opening 21. The porous membrane 10 has the first principal surface 10a facing the opening 21 and the second principal surface 10b facing a side opposite to the opening 21. The maximum stress σ when the push pin 60 is pushed from the first principal surface 10a side of the porous membrane 10 is defined as the welding strength S of the porous membrane 10. In this case, the welding strength S of the porous membrane 10 is in the range of 1.5 N or more and 30 N or less. The welding strength S of the porous membrane 10 can be measured by the welding strength measurement test described above.

In the air-permeable structure 100, the welding strength S of the porous membrane 10 is in the range of 1.5 N or more and 30 N or less, and the air-permeable structure has a higher welding strength than that of an air-permeable structure using a conventional porous membrane.

The lower limit of the welding strength S of the porous membrane 10 in the air-permeable structure 100 may be 2.5 N or more, 5 N or more, 7.5 N or more, or even 10 N or more. The upper limit of the welding strength S of the porous membrane 10 may be 29 N or less, 28 N or less, or even 27 N or less.

As shown in FIG. 2A and FIG. 4, a welded portion 30 formed by melting and solidifying a material forming the housing 20 by ultrasonic welding is formed between the housing 20 and the porous membrane 10. The welded portion 30 has an annular shape in plan view. For ease of understanding, the welded portion 30 is shown transparently in FIG. 2B.

As shown in FIG. 2A, the air-permeable structure 100 has a first region 11 in which the housing 20 and the porous membrane 10 are present, and which includes the welded portion 30, and a second region 12 in which the housing 20 is absent and the porous membrane 10 is exposed. As shown in FIG. 2B, the first region 11 has an annular shape in plan view. The second region 12 has a circular shape in plan view. As long as the welded portion 30 is included in the first region 11, an outer edge 11a of the first region 11 may or may not overlap an outer edge 30a of the welded portion 30. An inner edge 11b of the first region 11 may or may not overlap an inner edge 30b of the welded portion 30.

A width 30d (length in a radial direction) of the welded portion 30 may be appropriately set according to, for example, a width 11d (length in the radial direction) of the first region 11. Alternatively, the width may be appropriately set according to a width (length in the radial direction: (d2 - d1)/2) of an acting surface 51s of the welding horn 51 included in the welding apparatus 50 as shown in FIG. 3. The width 30d of the welded portion 30 may be, for example, in the range of 0.5 mm or more and 1.5 mm or less.

In the air-permeable structure 100, the average thickness of the porous membrane 10 in the second region 12 is preferably in the range of 120 µm or more and 350 µm or less. The average thickness of the flat region 12 of the porous membrane 10 in the second region 12 is the same as the average thickness of the porous membrane 10 before ultrasonic welding to the housing 20.

The lower limit of the average thickness of the porous membrane 10 in the second region 12 may be 125 µm or more, 135 µm or more, 150 µm or more, or even 175 µm or more. The upper limit of the average thickness of the porous membrane 10 in the second region 12 may be 340 µm or less, 330 µm or less, or even 320 µm or less.

### <Method for measuring thickness in second region>

The average thickness of the porous membrane 10 in the second region 12 can be determined by measuring thicknesses at any five points on the porous membrane 10 in the second region 12 with, for example, a dial gauge and averaging the measured values. The average thickness of the porous membrane 10 in the second region 12 can also be determined by measuring thicknesses at any five points in a SEM observation image of a cross-section of the porous membrane 10 in the second region 12 and averaging the measured values.

The welding strength S of the porous membrane 10 may vary depending on a material forming the housing 20. The material forming the housing 20 is preferably a resin, particularly preferably a thermoplastic resin. The housing 20 may be formed of a thermoplastic resin. When the housing 20 is formed of a thermoplastic resin, the welded portion 30 formed by melting and solidifying the thermoplastic resin forming the housing 20 is easily formed between the housing 20 and the porous membrane 10 during ultrasonic welding.

The thermoplastic resin may contain an additive such as glass fibers. When the thermoplastic resin contains the additive, the content of the additive may be, for example, in the range of 15 mass% to 45 mass%, or in the range of 20 mass% to 40 mass%.

Examples of the thermoplastic resin include polypropylene (PP), polybutylene terephthalate (PBT), polycarbonate (PC), polyamide 6 (PA6), polyamide 66 (PA66), ABS, and ASA.

The housing 20 may be formed of PP, or may be formed of PBT. The housing 20 may be formed of PP blended with glass fibers, or may be formed of PBT blended with glass fibers. For example, when the housing 20 is formed of PP blended with glass fibers, the welding strength S of the porous membrane 10 may be in the range of 2.5 N or more and 30 N or less. For example, when the housing 20 is formed of PBT blended with glass fibers, the welding strength S of the porous membrane 10 may be in the range of 1.5 N or more and 25 N or less.

The housing 20 includes a housing of an automotive component. The housing 20 is preferably a housing of an automotive component. As described above, in the housing of the automotive component, the porous membrane 10 is desirably joined to the housing 20 by welding. According to the air-permeable structure 100, the welding strength of the porous membrane 10 to the housing 20 of the automotive component can be enhanced.

### [Method for manufacturing air-permeable structure]

Hereinafter, a method for manufacturing the air-permeable structure 100 will be described. The air-permeable structure 100 can be manufactured by, for example, a method described below.

First, the circular porous membrane 10 is disposed on the housing 20 having the circular opening 21 so as to cover the opening 21. Next, through use of the welding apparatus 50 as shown in FIG. 3, the porous membrane 10 is ultrasonically welded to the housing 20 by the welding horn 51. Thus, the air-permeable structure 100 can be obtained.

### EXAMPLES

Hereinafter, the present invention will be described more specifically by way of Examples. The present invention is not limited to Examples described below.

The average thickness, average node area, and Gurley air permeability of a porous membrane were determined by the above methods.

### [Production of porous membrane]

### (Example 1)

20 parts by weight of a liquid lubricant (n-dodecane, manufactured by Japan Energy Corporation) was uniformly mixed with 100 parts by weight of a fine PTFE powder (Polyflon F-104, manufactured by Daikin Industries, Ltd.). The mixture was compressed in a cylinder, and then extruded with a ram extruder. Thus, a sheet-shaped molded body extending in a predetermined direction was obtained. The sheet-shaped molded body was passed between metal rolling rolls in a state of containing the liquid lubricant to be rolled to a thickness of 260 µm. After the removal of the liquid lubricant by heating the sheet-shaped molded body to 150°C, the sheet-shaped molded body was dried. Next, the sheet-shaped molded body was stretched in its longitudinal direction at a stretching ratio of 3.7 at 380°C. The stretching was performed once only in the longitudinal direction. Thus, a porous PTFE membrane of Example 1 was obtained. The porous PTFE membrane of Example 1 had the average thickness, the average node area, and the Gurley air permeability shown in Table 1.

### [Example 2]

A porous PTFE membrane of Example 2 was obtained by the same method as that of Example 1, except that the sheet-shaped molded body rolled to a thickness of 260 µm was stretched in the longitudinal direction at a stretching ratio of 4.2 at 380°C. The porous PTFE membrane of Example 2 had the average thickness, the average node area, and the Gurley air permeability shown in Table 1.

### [Example 3]

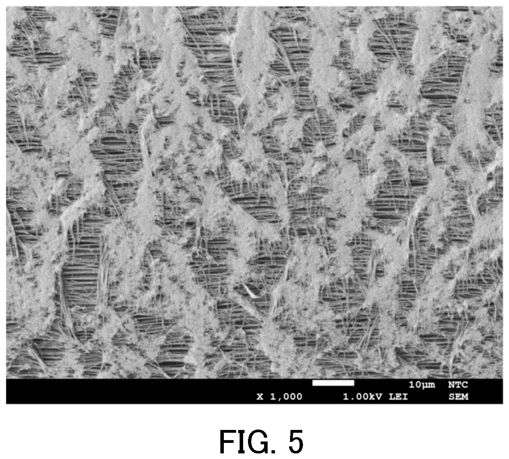

A porous PTFE membrane of Example 3 was obtained by the same method as that of Example 1, except that the sheet-shaped molded body rolled to a thickness of 200 µm was stretched in the longitudinal direction at a stretching ratio of 3.0 at 380°C. The porous PTFE membrane of Example 3 had the average thickness, the average node area, and the Gurley air permeability shown in Table 1. FIG. 5 shows a SEM image (magnification: 1000 times) of a cross-section of the porous PTFE membrane of Example 3. As shown in FIG. 5, the porous PTFE membrane of Example 3 had a structure in which nodes were connected in the extending direction of fibrils.

### [Example 4]

A porous PTFE membrane of Example 4 was obtained by the same method as that of Example 1, except that the sheet-shaped molded body rolled to a thickness of 240 µm was stretched in the longitudinal direction at a stretching ratio of 3.0 at 380°C. The porous PTFE membrane of Example 4 had the average thickness, the average node area, and the Gurley air permeability shown in Table 1.

### [Example 5]

A porous PTFE membrane of Example 5 was obtained by the same method as that of Example 1, except that the sheet-shaped molded body rolled to a thickness of 240 µm was stretched in the longitudinal direction at a stretching ratio of 4.0 at 380°C. The porous PTFE membrane of Example 5 had the average thickness, the average node area, and the Gurley air permeability shown in Table 1.

### [Example 6]

A porous PTFE membrane of Example 6 was obtained by the same method as that of Example 1, except that the sheet-shaped molded body rolled to a thickness of 240 µm was stretched in the longitudinal direction at a stretching ratio of 5.0 at 380°C. The porous PTFE membrane of Example 6 had the average thickness, the average node area, and the Gurley air permeability shown in Table 1.

### [Example 7]

A porous PTFE membrane of Example 7 was obtained by the same method as that of Example 1, except that the sheet-shaped molded body rolled to a thickness of 240 µm was stretched in the longitudinal direction at a stretching ratio of 6.0 at 380°C. The porous PTFE membrane of Example 7 had the average thickness, the average node area, and the Gurley air permeability shown in Table 1.

### [Example 8]

A porous PTFE membrane of Example 8 was obtained by the same method as that of Example 1, except that the sheet-shaped molded body rolled to a thickness of 300 µm was stretched in the longitudinal direction at a stretching ratio of 3.0 at 380°C. The porous PTFE membrane of Example 8 had the average thickness, the average node area, and the Gurley air permeability shown in Table 1.

### [Example 9]

A porous PTFE membrane of Example 9 was obtained by the same method as that of Example 1, except that the sheet-shaped molded body rolled to a thickness of 300 µm was stretched in the longitudinal direction at a stretching ratio of 6.0 at 380°C. The porous PTFE membrane of Example 9 had the average thickness, the average node area, and the Gurley air permeability shown in Table 1.

### [Example 10]

A porous PTFE membrane of Example 10 was obtained by the same method as that of Example 1, except that the sheet-shaped molded body rolled to a thickness of 280 µm was stretched in the longitudinal direction at a stretching ratio of 5.2 at 380°C. The porous PTFE membrane of Example 10 had the average thickness, the average node area, and the Gurley air permeability shown in Table 1.

### [Example 11]

A porous PTFE membrane of Example 11 was obtained by the same method as that of Example 1, except that the sheet-shaped molded body rolled to a thickness of 450 µm was stretched in the longitudinal direction at a stretching ratio of 5.0 at 380°C. The porous PTFE membrane of Example 11 had the average thickness, the average node area, and the Gurley air permeability shown in Table 1.

### [Example 12]

A porous PTFE membrane of Example 12 was obtained by the same method as that of Example 1, except that the sheet-shaped molded body rolled to a thickness of 400 µm was stretched in the longitudinal direction at a stretching ratio of 4.2 at 380°C. The porous PTFE membrane of Example 12 had the average thickness, the average node area, and the Gurley air permeability shown in Table 1.

### [Example 13]

A porous PTFE membrane of Example 13 was obtained by the same method as that of Example 1, except that the sheet-shaped molded body rolled to a thickness of 280 µm was stretched in the longitudinal direction at a stretching ratio of 3.2 at 380°C. The porous PTFE membrane of Example 13 had the average thickness, the average node area, and the Gurley air permeability shown in Table 1.

### [Comparative Example 1]

A porous PTFE membrane of Comparative Example 1 was obtained by the same method as that of Example 1, except that the sheet-shaped molded body rolled to a thickness of 200 µm was stretched in the longitudinal direction at a stretching ratio of 10 at 380°C. The porous PTFE membrane of Comparative Example 1 had the average thickness, the average node area, and the Gurley air permeability shown in Table 1.

Each porous membrane of Examples 1 to 13 and Comparative Example 1 was evaluated for its welding strength to a housing A formed of PP blended with 30 mass% of glass fibers and its welding strength to a housing B formed of PBT blended with 30 mass% of glass fibers by the above methods. HiQ DIALOG (frequency: 35 kHz) manufactured by Herrmann was used as a welding apparatus for ultrasonic welding. Autograph AG-X plus, 5 kN manufactured by Shimadzu Corporation was used as a tensile tester for measuring the welding strength. The evaluation results are shown in Table 1 below.

**[Table 1]**

| | Porous membrane | | | Welding strength vs housing A (N) | Welding strength vs housing B (N) |
|---|---|---|---|---|---|
| | Average thickness (µm) | Average node area (µm²) | Gurley air permeability (s/100 mL) | | |
| Example 1 | 176 | 226.4 | 17.2 | 24.4 | 16.1 |
| Example 2 | 174 | 123.6 | 15.6 | 18.3 | 5.8 |
| Example 3 | 139 | 388.9 | 4.2 | 19.0 | 4.8 |
| Example 4 | 170 | 348.1 | 22.1 | 20.8 | 8.5 |
| Example 5 | 160 | 196.0 | 8.3 | 19.1 | 6.5 |
| Example 6 | 157 | 181.0 | 5.7 | 16.6 | 5.0 |
| Example 7 | 155 | 124.1 | 3.8 | 2.5 | 1.5 |
| Example 8 | 217 | 249.0 | 35.7 | 27.0 | 11.2 |
| Example 9 | 194 | 127.6 | 5.5 | 10.3 | 2.7 |
| Example 10 | 180 | 143.1 | 7.8 | 17.5 | 2.9 |
| Example 11 | 320 | 139.3 | 10.9 | 22.1 | 16.3 |
| Example 12 | 296 | 199.4 | 13.8 | 28.3 | 23.3 |
| Example 13 | 210 | 296.4 | 28.5 | 24.1 | 17.1 |
| Comparative Example 1 | 110 | 36.5 | 6 | 0.8 | 0.2 |

As shown in Table 1, the porous membranes of Examples 1 to 13 each exhibited a high welding strength in the range of 1.5 N or more and 30 N or less. The welding strength of each of the porous membranes of Examples 1 to 13 to the housing A was in the range of 2.5 N or more and 30 N or less. The welding strength of each of the porous membranes of Examples 1 to 13 to the housing B was in the range of 1.5 N or more and 25 N or less. In contrast, the welding strength of the porous membrane of Comparative Example 1 was as low as 0.8 N or less.

In each of the porous membranes of Examples 1 to 13, the average node area was in the range of more than 100 µm² and 500 µm² or less, and the average thickness was in the range of 120 µm or more and 350 µm or less. From the comparison between each of the porous membranes of Examples 1 to 13 and the porous membrane of Comparative Example 1, it is presumed that when the average node area is in the range of more than 100 µm² and 500 µm² or less, and the average thickness is in the range of 120 µm or more and 350 µm or less, the condition that the welding strength S is in the range of 1.5 N or more and 30 N or less is easily achieved.

### Industrial Applicability

The technique disclosed herein can be applied to various electronic devices including: automotive components, such as electronic control units (ECU), lamps, motors, various sensors, pressure switches, and actuators; wearable devices such as smart watches; various cameras; communication devices, such as mobile phones and smartphones; and sensor devices.

## Claims

1. An air-permeable structure comprising:
a housing having an opening; and
a porous membrane ultrasonically welded to the housing so as to cover the opening,
wherein the porous membrane has a first principal surface facing the opening and a second principal surface facing a side opposite to the opening, and
wherein when a maximum stress when a push pin is pushed from the first principal surface side of the porous membrane is defined as a welding strength of the porous membrane, the welding strength of the porous membrane is in a range of 1.5 N or more and 30 N or less.

2. The air-permeable structure according to claim 1,
wherein the porous membrane includes fibrils and nodes connected to the fibrils, and
wherein an average node area of the porous membrane is in a range of more than 100 µm² and 500 µm² or less.

3. The air-permeable structure according to claim 1 or 2,
wherein the air-permeable structure has a first region in which the housing and the porous membrane are present, and which includes a welded portion formed between the housing and the porous membrane, and a second region in which the housing is absent and the porous membrane is exposed, and
wherein an average thickness of the porous membrane in the second region is in a range of 120 µm or more and 350 µm or less.

4. The air-permeable structure according to claim 1 or 2, wherein a Gurley air permeability of the porous membrane is in a range of 3 seconds/100 mL or more and 40 seconds/100 mL or less.

5. The air-permeable structure according to claim 1 or 2, wherein the housing is formed of a thermoplastic resin.

6. The air-permeable structure according to claim 1 or 2, wherein the housing includes a housing of an automotive component.

7. A porous membrane having a welding strength in a range of 1.5 N or more and 30 N or less, which is determined by the following welding strength measurement test.
<Welding strength measurement test>
A sample body in which the porous membrane is ultrasonically welded to a housing having an opening so as to cover the opening is produced. In the sample body, the porous membrane has a first principal surface facing the opening and a second principal surface facing a side opposite to the opening. For the sample body, a maximum stress when a push pin is pushed from the first principal surface side of the porous membrane is measured. The measured value is defined as a welding strength of the porous membrane.

8. The porous membrane according to claim 7, comprising fibrils and nodes connected to the fibrils, wherein the porous membrane has an average node area in a range of more than 100 µm² and 500 µm² or less.

9. The porous membrane according to claim 7 or 8, wherein the porous membrane has an average thickness in a range of 120 µm or more and 350 µm or less.

10. The porous membrane according to claim 7 or 8, wherein the porous membrane has a Gurley air permeability in a range of 3 seconds/100 mL or more and 40 seconds/100 mL or less.

11. The porous membrane according to claim 7 or 8, wherein the porous membrane is used as an air-permeable membrane of an automotive component.
